# EUROPÄISCHE PATENTSCHRIFT

(11) **EP 1 800 458 B1**
(45) Veröffentlichungstag und Bekanntmachung des Hinweises auf die Patenterteilung: **12.12.2012**
(21) Anmeldenummer: 05794789.7
(22) Anmeldetag: 06.10.2005
(51) Int. Cl.: H04L 29/08, G06F 17/30

(54) **VERFAHREN ZUR INITIALISIERUNG EINES DATENNETZES**
METHOD FOR INITIALIZING A PEER-TO-PEER DATA NETWORK
PROCEDE D'INITIALISATION D'UN RESEAU DE DONNEES POINT A POINT

(30) Priorität: 15.10.2004 DE 102004050348
(43) Veröffentlichungstag der Anmeldung: 27.06.2007
(73) Patentinhaber: SIEMENS AKTIENGESELLSCHAFT, 80333 München (DE)
(72) Erfinder: RUSITSCHKA, Steffen, 81543 München (DE); SOUTHALL, Alan, 81247 München (DE); ÖZTUNALI, Sebnem, 80538 München (DE)
(86) Internationale Anmeldenummer: PCT/EP2005/055043
(87) Internationale Veröffentlichungsnummer: WO 2006/048363

(56) Entgegenhaltungen:
- US-A1- 2003 028 623
- US-A1- 2003 208 540

## Beschreibung

Die Erfindung betrifft Verfahren zur Initialisierung eines Datennetzes und/oder zur Lokalisation und/oder Übertragung von Daten in einem Peer-to-Peer-Datennetz.

Peer-to-Peer-Netzwerke, wie z.B. das Netzwerk "Gnutella", werden heutzutage häufig von Benutzern verwendet, die gegenseitig Informationen und Daten austauschen möchten. Die einzelnen Rechner des Datennetzes können hierbei direkt miteinander verbunden werden, um entsprechende Daten auszutauschen. Um zu ermitteln, welche Daten die anderen Rechner enthalten, werden im Gnutella-Netz Anfragen von einem Rechner an beliebige Rechner im Datennetz gerichtet, um die gewünschten Daten zu lokalisieren. Dieser Vorgang wird als Fluten bezeichnet, da ohne vorgegebene Kriterien die Anfrage an alle Rechner gerichtet wird, wodurch das Datennetz stark belastet wird.

Aus dem Stand der Technik (siehe z.B. Michael Moore, Tatsuya Suda, "Adaptable Peer-to-Peer Discovery of Objects that Match Multiple Keywords", SAINT Workshops 2004, Seiten 402 bis 407) ist die Idee bekannt, in einem Peer-to-Peer-Netzwerk Objekte schneller mit Hilfe von Schlüsselwörtern im Rahmen einer Suche zu lokalisieren. Es wird hierbei nicht darauf eingegangen, wie mit Hilfe der Verwendung von Schlüsselwörtern ein strukturiertes Datennetz aufgebaut werden kann.

Aus der Druckschrift US 2003/01 82 270 A1 ist ein Verfahren zur Datensuche in einem Peer-to-Peer-Netzwerk bekannt, wobei in den Rechnern des Netzwerks Metadaten zur Charakterisierung von gespeicherten Daten hinterlegt sind und nach Daten in dem Netzwerk mithilfe der Metadaten gesucht wird.

Die Druckschrift US 2003/0028623 A1 offenbart ein Verfahren zum Empfangen von Dateninhalten in einem Netzwerk basierend auf einer Client-Server-Struktur. Dabei wird durch einen Client eine Anfrage nach Daten an einen Verzeichnis-Server gerichtet, der in Antwort auf die Anfrage eine Liste von Kandidaten-Rechnern zurückgibt, welche den Dateninhalt möglicherweise bereitstellen.

In dem Dokument US 2003/0208540 A1 ist die Ausführung einer Applikation in einem Netzwerk beschrieben, wobei der Kontext der Applikation basierend auf einer Peer-to-Peer-Gruppe bestimmt wird, in welcher die Applikation ausgeführt wird.

Aufgabe der Erfindung ist es, ein Verfahren zur Initialisierung eines ein Peer-to-Peer-Netzwerk darstellendes Datennetzes, ein Verfahren zur Lokalisation von Daten in dem Datennetz sowie ein Verfahren zur Übertragung von Daten in dem Datennetz zu schaffen, wobei mit Hilfe der Verfahren das Datennetz dynamisch unter Verwendung von Schlüsselwörtern strukturiert wird.

Diese Aufgabe wird durch die unabhängigen Patentansprüche genlöst. Weiterbildungen der Erfindung sind in den abhängigen Ansprüchen definiert.

Das erfindungsgemäße Verfahren dient zur Initialisierung und/oder Aktualisierung eines Datennetzes in der Form eines Peer-to-Peer-Netzwerks, wobei das Datennetz eine Mehrzahl von Rechnern umfasst und jeder Rechner zu einem anderen Rechner eine Datenverbindung herstellen kann und wobei jedem Rechner eine Rechneridentität zugeordnet ist und in jedem Rechner ein oder mehrere Schlüsselwörter hinterlegt sind, welche auf dem jeweiligen Rechner gespeicherte Daten charakterisieren. Der Begriff "Schlüsselwort" ist hierbei allgemein zu verstehen und umfasst jede aus Buchstaben und/oder Zahlen und/oder anderen Zeichen bestehende Zeichenfolge, wobei die Schlüsselwörter jedoch vorzugsweise derart gewählt sind, dass sie für einen Benutzer eines Rechners im Datennetz eine beschreibende Information vermitteln.

In dem Verfahren leiten in einem Schritt a) wenigstens ein Teil der Rechner des Datennetzes untereinander Nachrichten weiter, um für wenigstens einen Teil der für die Rechner hinterlegten Schlüsselwörter zu ermitteln, welche Rechner die gleichen oder ähnliche Schlüsselwörter umfassen. In einem Schritt b) wird für jedes Schlüsselwort, für das gleiche oder ähnliche Schlüsselwörter existieren, eine Übertragungsschicht erzeugt, die durch das jeweilige Schlüsselwort charakterisiert ist und zu welcher die Rechner mit den gleichen oder ähnlichen Schlüsselwörtern gehören, wobei in wenigstens einem Teil der Rechner jeweils hinterlegt wird, zu welchen Übertragungsschichten der jeweilige Rechner gehört und welche weiteren Rechner zu diesen Übertragungsschichten gehören.

Durch die Zuordnung der Rechner zu Übertragungsschichten werden logische Verbindungen zwischen den Rechnern der gleichen Übertragungsschichten aufgebaut, da jeder Rechner einer Übertragungsschicht weiß, welche weiteren Rechner zu seiner Übertragungsschicht gehören. Auf diese Weise können in einem Datennetz, welches mit diesem Verfahren initialisiert wird, effektiv Suchanfragen nach Schlüsselwörtern in das Netz gesendet werden, wobei bei der Weiterleitung der Suchanfrage nur Rechner berücksichtigt werden, die in einer Übertragungsschicht liegen, welche durch wenigstens ein Schlüsselwort der Suchanfrage charakterisiert ist. Im Gegensatz zu herkömmlichen Peer-to-Peer-Netzen können Suchanfragen somit gezielt im Netz verteilt werden, und es kann auf ein Fluten des Datennetzes durch Suchanfragen verzichtet werden.

In einer bevorzugten Ausführungsform des erfindungsgemäßen Initialisierungsverfahrens wird eine Nachricht nur von Rechnern verarbeitet und weitergeleitet, welche die Nachricht noch nicht erhalten haben. Auf diese Weise wird eine mehrfache Verarbeitung von Nachrichten durch die Rechner im Datennetz verhindert.

In einer weiteren Ausgestaltung der Erfindung umfasst der Schritt a) des Initialisierungsverfahrens folgende Teilschritte:
a.1) ein oder mehrere Rechner des Datennetzes erzeugen Nachrichten, welche jeweils die Senderidentität des sendenden Rechners und wenigstens einen Teil der in dem sendenden Rechner hinterlegten Schlüsselwörter enthalten;
a.2) die in Schritt a.1) erzeugten Nachrichten werden durch die Rechner im Datennetz weitergeleitet, wobei der Rechner, der eine weitergeleitete Nachricht empfängt, diejenigen Schlüsselwörter aus der empfangenen Nachricht ermittelt, welche mit den bei sich hinterlegten Schlüsselwörtern übereinstimmen oder zu diesen ähnlich sind;
a.3) jeder Rechner, der eine oder mehrere übereinstimmende oder ähnliche Schlüsselwörter im Schritt a.2) ermittelt hat, sendet eine Antwort umfassend seine Rechneridentität und die im Schritt a.2) ermittelten Schlüsselwörter an den Rechner mit der Senderidentität der im Schritt a.2) empfangenen Nachricht.

Durch die Rücksendung einer Antwort wird dem Rechner, der ursprünglich eine Nachricht erzeugt hat, mitgeteilt, welche Schlüsselwörter er mit dem Rechner gemeinsam hat, von dem er die Antwort erhält, und es können entsprechende Übertragungsschichten in dem Rechner erzeugt werden, der die Antwort empfängt, wobei jeder Übertragungsschicht der Rechner zugeordnet wird, von dem die Antwort stammt.

In einer weiteren bevorzugten Ausführungsform des erfindungsgemäßen Initialisierungsverfahrens umfasst der Schritt b) des Verfahrens folgende Teilschritte:
b.1) jeder Rechner, der im Schritt a.2) ein oder mehrere übereinstimmende oder ähnliche Schlüsselwörter ermittelt hat, ordnet für jedes ermittelte Schlüsselwort den Rechner mit der Senderidentität der zuvor empfangenen Nachricht der Übertragungsschicht zu, welche durch das ermittelte Schlüsselwort charakterisiert ist;
b.2) jeder Rechner, der im Schritt a.3) eine Antwort empfangen hat, ordnet für jedes in der Antwort enthaltene Schlüsselwort die in der Antwort enthaltene Rechneridentität der Übertragungsschicht zu, die durch das Schlüsselwort charakterisiert ist.

Auf diese Weise erfolgt bereits bei Rechnern, welche eine Nachricht erhalten und gemeinsame Schlüsselwörter ermitteln können, die Erzeugung einer entsprechenden Übertragungsschicht.

In einer weiteren Ausgestaltung des Verfahrens wird in wenigstens einem Teil der Rechner eine gesonderte Übertragungsschicht erzeugt, zu der die mit dem jeweiligen Rechner verbundenen Rechner gehören, die keine Übertragungsschicht mit dem jeweiligen Rechner gemeinsam haben. Hierdurch wird gewährleistet, dass bei später durchgeführten Suchanfragen, bei denen das gesuchte Schlüsselwort selbst nicht in dem suchenden Rechner hinterlegt ist, die Suchanfrage über die gesonderte Übertragungsschicht dennoch im Datennetz verteilt wird.

In einer weiteren bevorzugten Ausführungsform des erfindungsgemäßen Verfahrens wird mit wenigstens einem Teil der Rechner des Datennetzes in vorgegebenen zeitlichen Abständen und/oder bei Veränderung der in den Rechnern hinterlegten Schlüsselwörter die Schritte a) und b) des erfindungsgemäßen Initialisierungsverfahrens wiederholt, wobei die Nachrichten vorzugsweise zwischen Rechnern ausgetauscht werden, die zu den gleichen Übertragungsschichten gehören. Auf diese Weise wird eine dynamische Aktualisierung des Datennetzes ermöglicht, wobei bei der Aktualisierung insbesondere Übertragungsschichten mit neu hinzugefügten Schlüsselwörtern aufgenommen werden und ferner Rechner, welche nicht mehr mit dem Datennetz verbunden sind, aus den vorhandenen Übertragungsschichten gestrichen werden.

In einer besonders bevorzugten Ausführungsform des erfindungsgemäßen Verfahrens kommunizieren die Rechner des Datennetzes über Internetverbindungen miteinander, wobei die Rechneridentitäten vorzugsweise durch die IP-Adressen der Rechner festgelegt werden. Insbesondere verwalten die Rechner des Datennetzes Dateien und jeder Datei sind ein oder mehrere Schlüsselwörter zugeordnet, wobei die Schlüsselwörter einer Datei den Inhalt der Datei charakterisieren und von Benutzern der Rechner im Datennetz gesucht werden können.

In einer weiteren Ausgestaltung des erfindungsgemäßen Verfahrens vergibt wenigstens ein Teil der Rechner Prioritäten für die Übertragungsschichten, wobei insbesondere eine Übertragungsschicht eine um so höhere Priorität erhält, je öfter das ihr zugeordnete Schlüsselwort im Datennetz gesucht und/oder gefunden wurde. Auf diese Weise kann eine nachfolgende Suche im Datennetz nach vorbestimmten Kriterien priorisiert werden, wobei bestimmte Schlüsselwörter der Suche bevorzugt vor anderen Schlüsselwörtern berücksichtigt werden.

Die Erfindung betrifft neben dem soeben beschriebenen Initialisierungsverfahren auch ein Verfahren zur Lokalisation von Daten in einem Datennetz in der Form eines Peer-to-Peer-Netzwerks, wobei das Verfahren folgende Schritte umfasst:
i) das Datennetz wird mit dem erfindungsgemäßen Initialisierungsverfahren initialisiert und/oder aktualisiert;
ii) durch wenigstens einen Rechner des Datennetzes wird eine Suchanfrage nach einem oder mehreren Schlüsselwörtern erzeugt;
iii) die Suchanfrage wird an die Rechner des Datennetzes weitergeleitet, wobei ein Rechner vor der Weiterleitung einer Suchanfrage diejenigen seiner Übertragungsschichten ermittelt, welche durch die Schlüsselwörter der Suchanfrage charakterisiert sind, und anschließend nur Rechner einer oder mehrerer ermittelter Übertragungsschichten bei der Weiterleitung berücksichtigt;
iv) wenn eine Suchanfrage von einem Rechner empfangen wird, der zu einer und/oder mehreren und/oder allen Übertragungsschichten gehört, welche durch Schlüsselwörter der Suchanfrage charakterisiert sind, werden die mit den Schlüsselwörtern der Suchanfrage verknüpften Daten auf diesem Rechner als die durch das Verfahren lokalisierten Daten identifiziert.

Auf diese Weise wird eine effektive Suche nur in Übertragungsschichten gewährleistet, welche durch Schlüsselwörter der Suchanfrage charakterisiert sind.

In einer bevorzugten Ausführungsform des erfindungsgemäßen Lokalisationsverfahrens werden im Falle, dass ein Rechner, der im Schritt iii) keine Übertragungsschichten ermitteln kann, bei der Weiterleitung der Suchanfrage alle Rechner der Übertragungsschichten berücksichtigt, zu denen dieser Rechner gehört. Hierdurch wird auch eine Weiterleitung der Suchanfrage gewährleistet, wenn der entsprechende Rechner keine Übertragungsschicht aufweist, die durch ein Schlüsselwort der Suchanfrage charakterisiert ist.

In einer weiteren Ausführungsform des erfindungsgemäßen Lokalisationsverfahrens bevorzugt ein Rechner im Schritt iii) bei der Weiterleitung einer Suchanfrage diejenigen von ihm ermittelten Übertragungsschichten, die der Rechner nicht mit dem Rechner gemeinsam hat, von dem er die Suchanfrage erhalten hat. Somit wird eine Suchanfrage effektiv an alle Übertragungsschichten weitergeleitet, welche durch Schlüsselwörter der Suchanfrage charakterisiert sind.

In einer weiteren Ausgestaltung des erfindungsgemäßen Lokalisationsverfahrens wird eine Suchanfrage von einem Rechner nur verarbeitet und weitergeleitet, wenn der Rechner die Suchanfrage noch nicht erhalten hat. Hierdurch wird eine mehrfache Verarbeitung der Suchanfrage durch einen Rechner des Datennetzes vermieden.

In einer weiteren Ausgestaltung des Verfahrens, in dem die Übertragungsschichten unterschiedlichen Prioritäten zugeordnet sind, leitet ein Rechner eine Suchanfrage nur an die Rechner weiter, die zu der ermittelten Übertragungsschicht mit der höchsten Priorität gehören.

Neben dem soeben beschriebenen Verfahren zur Lokalisation von Daten in einem ein Peer-to-Peer-Netzwerk darstellenden Datennetz umfasst die Erfindung ferner ein Verfahren zur Übertragung von Daten in einem ein Peer-to-Peer-Netzwerk darstellenden Datennetz, wobei Daten in dem Datennetz mit dem erfindungsgemäßen Lokalisationsverfahren über eine von einem Rechner erzeugte Suchanfrage lokalisiert werden. Anschließend werden von dem Rechner, auf dem sich die lokalisierten Daten befinden, die Daten wenigstens teilweise an den Rechner übertragen, der die Suchanfrage erzeugt hat.

Darüber hinaus umfasst die Erfindung ein Peer-to-Peer-Netzwerk, wobei die Rechner des Datennetzes derart ausgestaltet sind, dass wenigstens eines der zuvor beschriebenen Verfahren im Betrieb des Datennetzes durchgeführt wird.

Ausführungsbeispiele der Erfindung werden nachfolgend detailliert anhand der beigefügten Figuren beschrieben.

Es zeigen:
- Figuren 1 bis 4:: schematische Darstellungen eines Datennetzes, anhand derer der Ablauf des erfindungsgemäßen Initialisierungsverfahrens erläutert wird;
- Figuren 5 und 6:: schematische Darstellungen der durch das erfindungsgemäße Verfahren erzeugten Übertragungsschichten, anhand derer das erfindungsgemäße Verfahren zur Lokalisation von Daten erläutert wird.

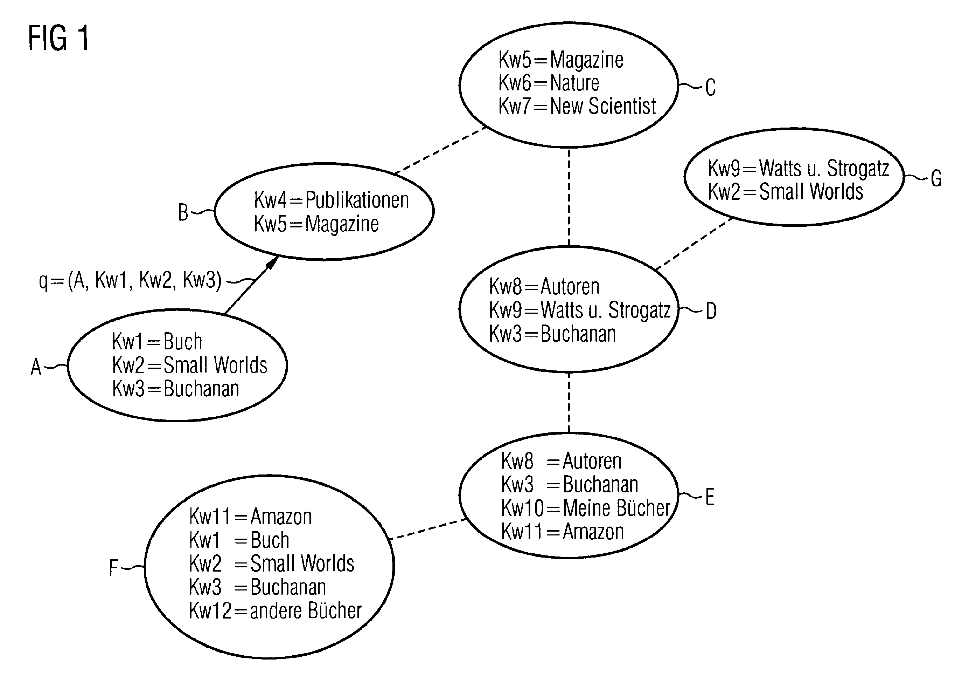

In Figur 1 ist schematisch ein Peer-to-Peer-Datennetz gezeigt, welches die Peers A, B, C, D, E, F und G umfasst. Unter Peer versteht man nachfolgend einen Rechner eines Datennetzes, welcher sowohl als Server als auch als Client fungieren kann. In einem solchen Peer-to-Peer-Netz kann sich jeder einzelne Peer direkt mit einem anderen Peer aus dem Netz verbinden. Auf jedem der Peers sind Ressourcen in der Form von Daten gespeichert, und die Benutzer jedes Peers möchten Daten mit Benutzern anderer Peers austauschen. Um eine leichtere Suche nach bestimmten Dateninhalten zu gewährleisten, sind die einzelnen Daten, welche vorzugsweise in Form von Dateien vorliegen, mit so genannten Schlüsselwörtern verknüpft, welche den Inhalt der einzelnen Dateien beschreiben sollen und auf den Peers, welche entsprechende Dateien enthalten, hinterlegt sind. In der hier beschriebenen Ausführungsform werden insgesamt zwölf Schlüsselwörter kw1 bis kw12 verwendet, welche folgende Beschreibung beinhalten:
kw1 = Buch
kw2 = Small Words
kw3 = Buchanan
kw4 = Publikationen
kw5 = Magazine
kw6 = Nature
kw7 = New Scientist
kw8 = Autoren
kw9 = Watts & Strogatz
kw10 = Meine Bücher
kw11 = Amazon
kw12 = andere Bücher

Durch das Schlüsselwort kw1 wird beispielsweise darauf hingewiesen, dass der entsprechende Peer, auf dem das Schlüsselwort gespeichert ist, Dateien aufweist, welche Inhalte von Büchern umfassen. Durch die Schlüsselwörter kw4 und kw5 wird beispielsweise mitgeteilt, dass literarische Inhalte in der Form von Publikationen und Magazinen auf dem entsprechenden Peer gespeichert sind. Analog vermitteln auch die anderen Schlüsselwörter entsprechende Informationen bezüglich des Inhalts der gespeicherten Dateien.

Anhand der Figuren 1 bis 4 wird nachfolgend beschrieben, wie ausgehend von Peer A eine Initialisierung des Datennetzes mit dem erfindungsgemäßen Verfahren stattfindet, wobei dem Peer A anfangs die restlichen Teile des Datennetzes nicht bekannt sind. Die Datenverbindungen zwischen den Rechnern B bis G, die bei der Initialisierung des Netzes vorliegen, sind mit gestrichelten Linien angedeutet.

Zur Initialisierung des Datennetzes, welche auch als Bootstrapping-Query bezeichnet wird, verbindet sich Peer A zunächst mit einem oder mehreren beliebigen Peers aus dem Netz. In Figur 1 wird zunächst eine Verbindung zu Peer B hergestellt. Das Herstellen der Verbindung erfolgt mit aus dem Stand der Technik bekannten Verfahren, beispielsweise sendet der Peer A einen so genannten "Ping" in das Netz aus und wartet, welche Rechner ihm darauf antworten. Nachdem eine Datenverbindung zwischen Peer A und Peer B hergestellt wurde, schickt Peer A die Anfrage q = (A, kw1, kw2, kw3) an den Peer B. Mit dieser Anfrage übermittelt der Peer A die ihm zugeordnete Rechneridentität an Peer B sowie alle auf ihn gespeicherten Schlüsselwörter kw1, kw2 und kw3.

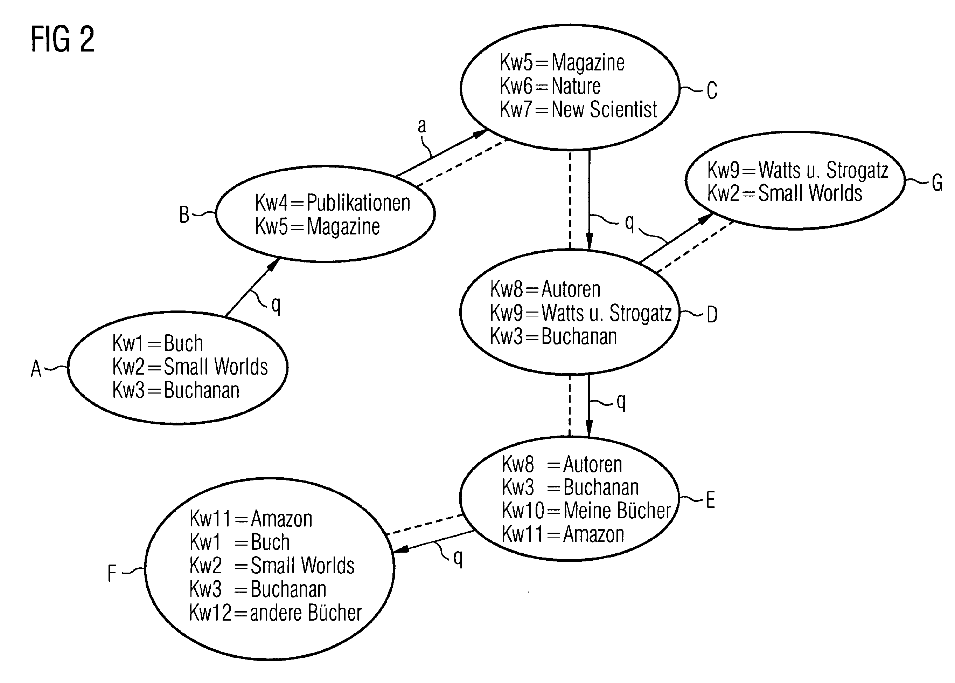

Die Anfrage wird anschließend in das gesamte Datennetz verteilt, wie in Figur 2 angedeutet ist. Insbesondere gelangt die Anfrage über die zwischen den Peers B und F bestehenden Datenverbindungen zunächst zu Peer C, von Peer C schließlich zu Peer D und von Peer D nachfolgend zu Peer G und Peer E. Schließlich leitet Peer E die Anfrage noch an Peer F weiter. Es ist hierbei zu beachten, dass ein Peer eine bei ihm eingehende Suchanfrage nur dann berücksichtigt und weiterleitet, wenn er sie zum ersten Mal erhält. Es sind deshalb in Figur 2 keine Anfragen mehr eingezeichnet, die zum zweiten Mal an den gleichen Peer gesendet werden.

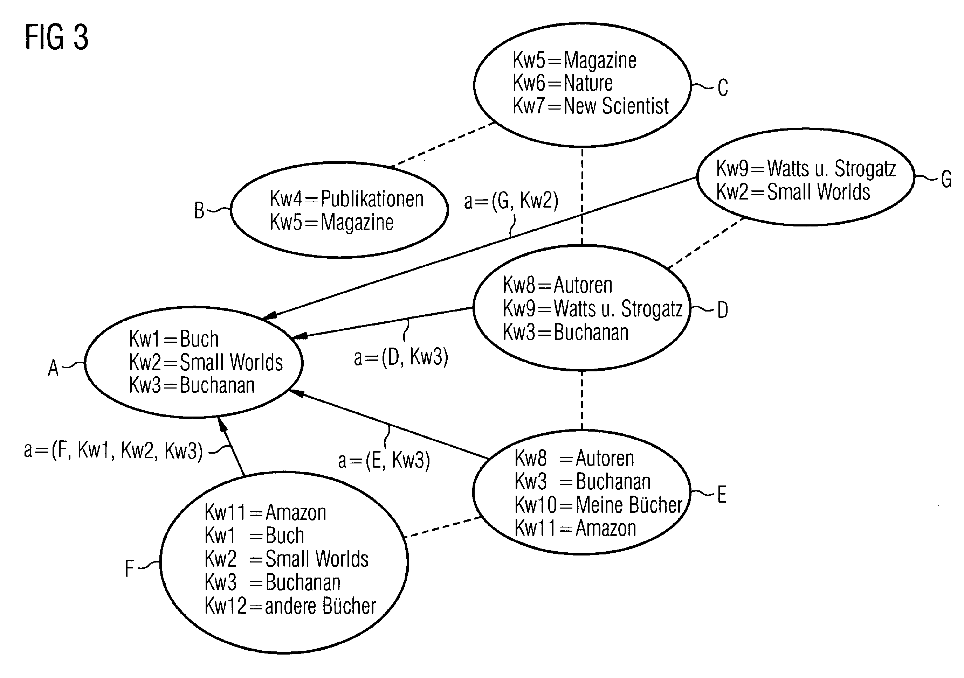

Jeder Peer, der eine Anfrage erhält, ermittelt zunächst, ob bzw. welche Schlüsselwörter der Anfrage mit den auf ihm gespeicherten Schlüsselwörtern übereinstimmen. Wie aus Figur 2 ersichtlich ist, haben Peer B und Peer C mit Peer A kein Schlüsselwort gemeinsam. Diese Peers leiten die Anfragen deshalb nur weiter, ohne eigene weitere Aktionen durchzuführen. Der erste Peer, der ein Schlüsselwort mit Peer A gemeinsam hat, ist Peer D. Dieser Peer umfasst das Schlüsselwort kw3, das auch auf Peer A hinterlegt ist. Bevor nun Peer D die Anfrage an die Peers G und E weiterleitet, schickt es eine Antwort a = (D, kw3) an Peer A zurück. Dies ist in Figur 3 gezeigt. Die Antwort enthält die Rechneridentität des Peers D sowie das gemeinsame Schlüsselwort kw3. Die Antwort kann direkt an das Peer A zurückgesendet werden (wie in Figur 3 gezeigt), sie kann jedoch auch auf demselben Weg an das Peer A zurückgeleitet werden, wie die Anfrage an das Peer D gelangt ist. Analog ermittelt das Peer G, dass es mit dem Peer A das Schlüsselwort kw2 gemeinsam hat und schickt eine entsprechende Antwort a = (G, kw2) an das Peer A. In gleicher Weise schickt das Peer E, welches mit Peer A das Schlüsselwort kw3 gemeinsam hat, die Antwort a = (E, kw3) an das Peer A. Das Peer F beinhaltet sogar alle drei auf Peer A gespeicherten Schlüsselwörter kw1, kw2, kw3. Deshalb übermittelt es als Antwort an das Peer A neben seiner eigenen Rechneridentität auch alle drei Schlüsselwörter, d.h. a = (F, kw1, kw2, kw3).

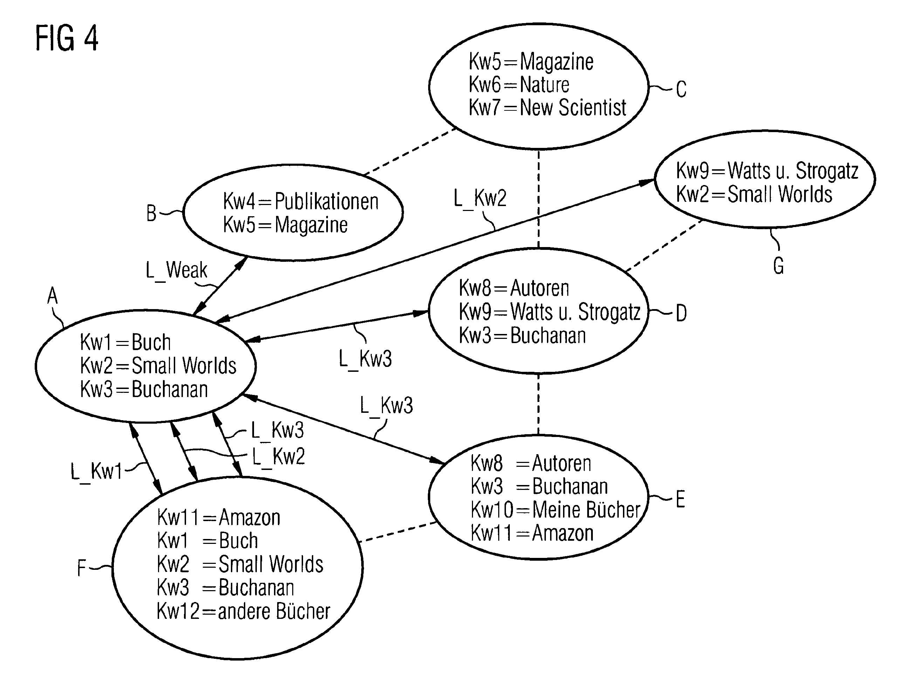

Durch die übermittelten Antworten weiß Peer A, welche Peers die gleichen Schlüsselwörter wie er aufweisen. Peer A erzeugt anschließend Übertragungsschichten, welche jeweils Peers mit gleichem Schlüsselwort umfassen, so dass zwischen Peer A und den Peers mit gleichen Schlüsselwörtern logische Verbindungen entstehen, welche in Figur 4 als Doppelpfeile angedeutet sind. Es existieren hierbei die Übertragungsschichten L_kw1, L_kw2, L_kw3 für jedes Schlüsselwort kw1, kw2 und kw3. Insbesondere besteht zwischen Peer A und Peer G die Übertragungsschicht L_kw2 und zwischen Peer A und Peer D sowie zwischen Peer A und Peer E die Übertragungsschicht L_kw3. Zwischen Peer A und Peer F bestehen aufgrund aller drei gemeinsamer Schlüsselwörter die Übertragungsschichten L_kw1, L_kw2 und L_kw3. Im Peer A ist somit gespeichert, zu welchen Übertragungsschichten Peer A selbst gehört und welchen weiteren Peers diese Übertragungsschichten zugeordnet sind. Insbesondere ist in Peer A die Information hinterlegt, dass der Schicht L_kw1 der Peer F zugeordnet ist, der Schicht L_kw2 die Peers F und G zugeordnet sind und der Schicht L_kw3 die Peers D, E und F zugeordnet sind. Auch in den Peers B bis G wird die Information bezüglich der Übertragungsschichten analog zu Peer A abgespeichert. Diese Information wird beispielsweise dann erzeugt, wenn das entsprechende Peer eine Anfrage erhalten hat und ein gemeinsames Schlüsselwort entsprechend der Anfrage ermitteln konnte. Das Peer kann dann bei sich für das gemeinsame Schlüsselwort die Übertragungsschicht erzeugen und aufgrund der Senderidentität aus der empfangenen Anfrage den sendenden Rechner dieser Übertragungsschicht zuordnen.

Neben Verbindungen über die Übertragungsschichten L_kw1 bis L_kw3 hat der Peer A auch eine so genannte "schwache" Verbindung über eine Übertragungsschicht L_weak zum Peer B, wie aus Figur 4 ersichtlich ist. Zwar haben Peer A und Peer B keine Schlüsselwörter gemeinsam, jedoch war Peer B der erste Peer, mit dem sich Peer A verbunden hat. Diese Verbindung wird beibehalten, damit Peer A zu einem späteren Zeitpunkt auch Suchanfragen an Peers richten kann, mit denen er kein Schlüsselwort gemeinsam hat. Dies wird weiter unten noch näher erläutert. Allgemein sind für jedes Peer im Datennetz ungefähr 20 bis 30 % der Gesamtverbindungen schwache Verbindungen zwischen Peers ohne gemeinsame Schlüsselwörter.

Analog zu Peer A können entsprechende Anfragen q auch durch die weiteren Peers B bis G in das Datennetz gesendet werden. Hierdurch werden die einzelnen Übertragungsschichten durch weitere dazugehörige Peers ergänzt. Beispielsweise entsteht hierdurch auch eine Übertragungsschicht zwischen Peers D und E sowie Peers F und E, da sie das Schlüsselwort kw3 gemeinsam haben.

Damit die Peers Veränderungen im Netz, beispielsweise Peerausfälle oder Aktualisierungen der Schlüsselwörter, erkennen, wird in periodischen Abständen eine so genannte "Stabilize-Query" durchgeführt, welche im Wesentlichen ein nochmaliges Durchführen des im Vorangegangenen beschriebenen Bootstrapping-Verfahrens ist, wobei die Anfragen q jedoch vorzugsweise von einem Peer entlang der ihm schon bekannten Schichten gesendet wird. Auf diese Weise können neu hinzugekommene Peers im Gesamtnetz bereits bekannten Übertragungsschichten zugeordnet werden oder es können weitere neue Übertragungsschichten im Netz aufgebaut werden. Ebenso können Peers, die nicht mehr im Gesamtnetz vorhanden sind, aus den entsprechenden Übertragungsschichten herausgenommen werden.

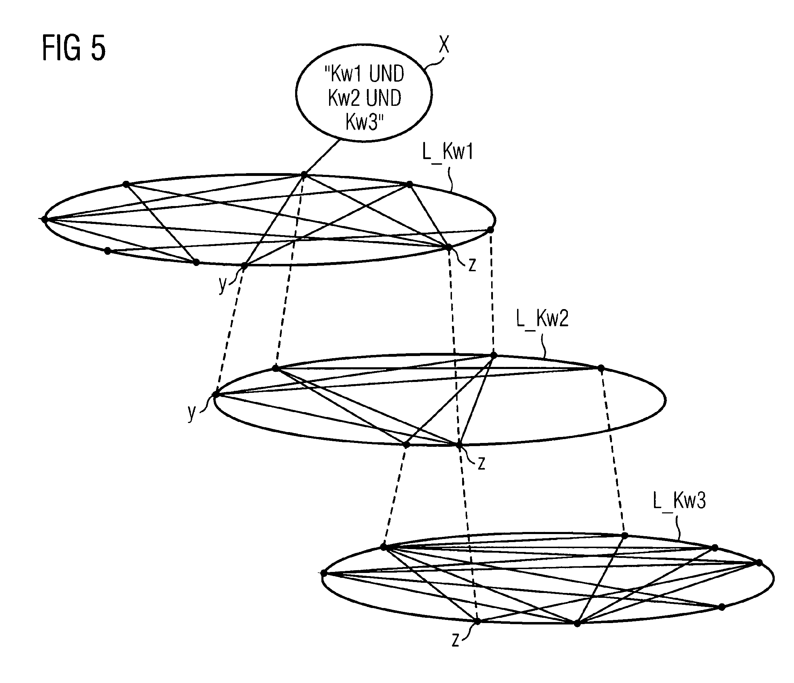

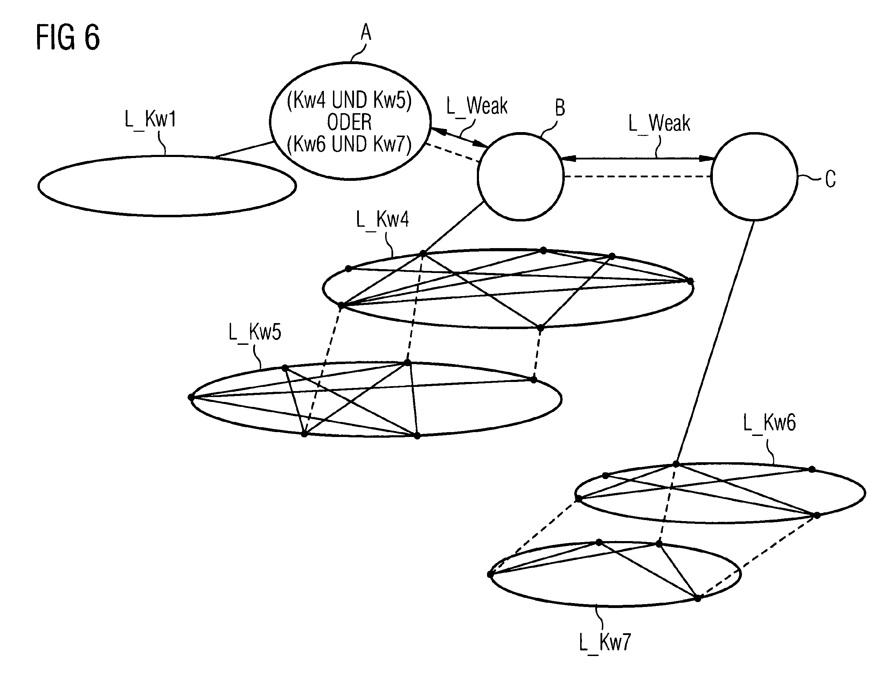

Durch das im Vorangegangenen beschriebene Verfahren können effektiv Suchanfragen im Datennetz durchgeführt werden, wie nachfolgend anhand von Figuren 5 und 6 erläutert wird.

Figur 5 zeigt die durch das zuvor beschriebene Initialisierungsverfahren erzeugte Schichtstruktur des Datennetzes. In Figur 5 sind beispielhaft die drei Übertragungsschichten L_kw1, L_kw2 und L_kw3 in drei unterschiedlichen Ebenen wiedergegeben. Die einzelnen Punkte in den Übertragungsschichten bezeichnen die Peers, die zu der jeweiligen Übertragungsschicht gehören und in dieser Schicht miteinander verbunden sind. Wie durch gestrichelte Linien angedeutet ist, sind einige Punkte mit darunter- bzw. darüber liegenden Übertragungsschichten verbunden. Die verbundenen Punkte beziehen sich auf das gleiche Peer und es wird hierdurch verdeutlicht, dass Peers gegebenenfalls auch zu mehreren Übertragungsschichten gehören, d.h. dass sie mehrere mit anderen Peers gemeinsame Schlüsselwörter umfassen.

In Figur 5 ist eine Suchanfrage angedeutet, gemäß der eine UND-Suche nach Peers durchgeführt werden soll, welche die Schlüsselwörter kw1, kw2 und kw3 enthalten, wobei die Suchanfrage von einem beliebigen Peer X aus gerichtet wird. Das Peer X schickt seine Suchanfrage nur an Peers, welche zu einer Übertragungsschicht gehören, die durch ein Schlüsselwort kw1, kw2 oder kw3 charakterisiert ist. Im beschriebenen Beispiel schickt Peer X seine Anfrage an Peers der Übertragungsschicht L_kw1. In der Suchanfrage werden somit keine Peers mehr berücksichtigt, welche mit dem Peer X keine der Übertragungsschichten L_kw1, L_kw2 und L_kw3 gemeinsam haben, denn diese Peers weisen keines der Schlüsselwörter kw1, kw2 oder kw3 auf. Durch die Weiterleitung der Suchanfrage in der Schicht L_kw1 gelangt die Suchanfrage an Peers, welche auch in der weiteren Schicht L_kw2 liegen. Beispielhaft ist in Figur 5 der Peer Y angedeutet. Suchanfragen, die zum Peer Y gelangen, werden anschließend an Peers der Übertragungsschicht L_kw2 weitergeleitet. Sobald in der Schicht L_kw2 ein Peer gefunden wird, der auch in der Schicht L_kw3 ist, war die Suchanfrage erfolgreich, und es wurde ein Peer gefunden, der alle drei Schlüsselwörter kw1 und kw2 und kw3 enthält. In Figur 5 ist ein durch die Suchanfrage gefundener Peer mit Z bezeichnet. Dieser Peer umfasst Dateien, deren Inhalte für den anfragenden Peer X interessant sind, und anschließend kann eine Übertragung der Dateien stattfinden. Auf diese Weise wird eine sehr effektive Suche nach Schlüsselwörtern gewährleistet, da nur noch in Übertragungsschichten gesucht wird, welche wenigstens ein Schlüsselwort mit der Suchanfrage gemeinsam haben.

Es kann jedoch der Fall auftreten, dass die Suchanfrage Schlüsselwörter umfasst, die der suchende Peer überhaupt nicht kennt. Es ist dann eine Weiterleitung der Suchanfrage an eine Übertragungsschicht, die durch ein Schlüsselwort der Suchanfrage charakterisiert ist, nicht möglich. In diesem Fall werden die oben erläuterten schwachen Verbindungen über die Übertragungsschicht L_weak genutzt. Ein entsprechendes Beispiel ist in Figur 6 gezeigt, wobei vom Peer A die Suchanfrage ("kw4 UND kw5" ODER "kw6 UND kw7") gestartet wird. Peer A ist mit keiner der Schichten L_kw4, L_kw5, L_kw6 und L_kw7 verbunden. Die Suchanfrage wird deshalb auch an Peer B weitergeleitet, zu dem eine schwache Verbindung über die Schicht L_weak besteht. Über Peer B gelangt die Suchanfrage in die Schichten L_kw4 und L_kw5, so dass hierüber alle Peers ermittelt werden können, welche beide Schlüsselwörter kw4 und kw5 enthalten. Peer B ist jedoch weder mit L_kw6 noch mit L_kw7 verbunden. Deshalb nutzt Peer B auch eine schwache Verbindung über eine Schicht L_weak zu Peer C. Über Peer C gelangt man wiederum in die Schichten L_kw6 und L_kw7 und kann auf diese Weise Peers ermitteln, welche sowohl das Schlüsselwort kw6 als auch das Schlüsselwort kw7 enthalten. Wie sich aus der vorangegangenen Erläuterung ergibt, kann man durch das zusätzliche Ausnutzen von schwachen Verbindungen auch in Schichten gelangen, welche dem anfragenden Peer selbst nicht bekannt sind, so dass mit dem erfindungsgemäßen Verfahren auch nach Schlüsselwörtern gesucht werden kann, die der Peer, der die Suchanfrage generiert, selbst nicht kennt.

## Patentansprüche

1. Verfahren zur Initialisierung und/oder Aktualisierung eines Datennetzes in der Form eines Peer-to-Peer-Netzwerks mit einer Mehrzahl von Rechnern (A, B,..., G), wobei jedem Rechner (A, B,..., G) eine Rechneridentität zugeordnet ist und jeder Rechner (A, B,..., G) zu einem anderen Rechner (A, B,..., G) eine Datenverbindung herstellen kann und wobei in jedem Rechner (A, B,..., G) ein oder mehrere Schlüsselwörter (kw1, kw2,..., kw12) hinterlegt sind, welche die auf dem jeweiligen Rechner (A, B,..., G) gespeicherten Daten charakterisieren,
mit folgenden Schritten:
a) wenigstens ein Teil der Rechner (A, B,..., G) des Datennetzes leiten untereinander Nachrichten (q) weiter, um für wenigstens einen Teil der in den Rechnern (A, B,..., G) hinterlegten Schlüsselwörter (kw1, kw2,..., kw12) zu ermitteln, welche Rechner (A, B,..., G) die gleichen oder ähnliche Schlüsselwörter (kw1, kw2,..., kw12) umfassen;
b) für jedes Schlüsselwort (kw1, kw2,..., kw12), für das gleiche oder ähnliche Schlüsselwörter (kw1, kw2,..., kw12) existieren, wird eine Übertragungsschicht (L_kw1, L_kw2, L_kw3) erzeugt, die durch das jeweilige Schlüsselwort (kw1, kw2,..., kw12) charakterisiert ist und zu welcher die Rechner (A, B,..., G) mit den gleichen oder ähnlichen Schlüsselwörtern (kw1, kw2,..., kw12) gehören, wobei in wenigstens einem Teil der Rechner (A, B,..., G) jeweils hinterlegt wird, zu welchen Übertragungsschichten (L_kw1, L_kw2, L_kw3) der jeweilige Rechner (A, B,..., G) gehört und welche weiteren Rechner (A, B,..., G) zu diesen Übertragungsschichten (L_kw1, L_kw2, L_kw3) gehören, wobei eine Übertragungsschicht derart ausgestaltet ist, dass bei der Weiterleitung von Suchanfragen nach Schlüsselwörtern nur Rechner berücksichtigt werden, die in einer Übertragungsschicht liegen, welche durch wenigstens ein Schlüsselwort der Suchanfrage charakterisiert ist.

2. Verfahren nach Anspruch 1, wobei eine Nachricht (q) nur von denjenigen Rechnern (A, B,..., G) verarbeitet und weitergeleitet wird, welche die Nachricht (q) noch nicht erhalten haben.

3. Verfahren nach einem der vorhergehenden Ansprüche, wobei Schritt a) folgende Teilschritte umfasst:
a.1) ein oder mehrere Rechner (A, B,..., G) des Datennetzes erzeugen Nachrichten (q), welche jeweils die Senderidentität des sendenden Rechners (A, B,..., G) und wenigstens einen Teil der in dem sendenden Rechner (A, B,..., G) hinterlegten Schlüsselwörter (kw1, kw2,..., kw12) enthalten;
a.2) die in Schritt a.1) erzeugten Nachrichten (q) werden durch die Rechner (A, B,..., G) im Datennetz weitergeleitet, wobei jeder Rechner (A, B,..., G), der eine weitergeleitete Nachricht (q) empfängt, diejenigen Schlüsselwörter (kw1, kw2,..., kw12) aus der empfangenen Nachricht (q) ermittelt, welche mit den bei sich hinterlegten Schlüsselwörtern (kw1, kw2,..., kw12) übereinstimmen oder zu diesen ähnlich sind;
a.3) jeder Rechner (A, B,..., G), der ein oder mehrere übereinstimmende oder ähnliche Schlüsselwörter (kw1, kw2,..., kw12) im Schritt a.2) ermittelt hat, sendet eine Antwort (a) umfassend seine Rechneridentität und die in Schritt a.2) ermittelten Schlüsselwörter (kw1, kw2,...,kw12) an den Rechner (A, B,..., G) mit der Senderidentität der im Schritt a.2) empfangenen Nachricht (q).

4. Verfahren nach Anspruch 3, wobei Schritt b) folgende Teilschritte umfasst:
b.1) jeder Rechner (A, B,..., G), der im Schritt a.2) ein oder mehrere übereinstimmende oder ähnliche Schlüsselwörter (kw1, kw2,..., kw12) ermittelt hat, ordnet für jedes ermittelte Schlüsselwort (kw1, kw2,..., kw12) den Rechner (A, B,..., G) mit der Senderidentität der zuvor empfangenen Nachricht (q) der Übertragungsschicht (L_kw1, L_kw2, L_kw3) zu, welche durch das ermittelte Schlüsselwort (kw1, kw2,..., kw12) charakterisiert ist;
b.2) jeder Rechner (A, B,..., G), der im Schritt a.3) eine Antwort (a) empfangen hat, ordnet für jedes in der Antwort (a) enthaltene Schlüsselwort (kw1, kw2,..., kw12) die in der Antwort (a) enthaltene Rechneridentität der Übertragungsschicht (L_kw1, L_kw2, L_kw3) zu, die durch das Schlüsselwort (kw1, kw2,..., kw12) charakterisiert ist.

5. Verfahren nach einem der vorhergehenden Ansprüche, wobei in wenigstens einem Teil der Rechner (A, B,..., G) eine gesonderte Übertragungsschicht (L_weak) erzeugt wird, zu der die mit dem jeweiligen Rechner (A, B,..., G) verbundenen Rechner (A, B,..., G) gehören, die keine Übertragungsschicht (L_kw1, L_kw2, L_kw3) mit dem jeweiligen Rechner (A, B,..., G) gemeinsam haben.

6. Verfahren nach einem der vorhergehenden Ansprüche, wobei mit wenigstens einem Teil der Rechner (A, B,..., G) des Datennetzes in vorgegebenen zeitlichen Abständen und/oder bei Veränderung der in den Rechnern (A, B,..., G) hinterlegten Schlüsselwörter (Kw1, kw2,..., kw12) die Schritte a) und b) des Verfahrens nach Anspruch 1 durchgeführt werden.

7. Verfahren nach Anspruch 6, wobei die Nachrichten (q) zwischen Rechnern (A, B,..., G) ausgetauscht werden, die zu den gleichen Übertragungsschichten (L_kw1, L_kw2, L_kw3) gehören.

8. Verfahren nach einem der vorhergehenden Ansprüche, wobei die Rechner (A, B,..., G) des Datennetzes über Internetverbindungen miteinander kommunizieren.

9. Verfahren nach Anspruch 8, wobei die Rechneridentitäten durch die IP-Adressen der Rechner (A, B,..., G) festgelegt werden.

10. Verfahren nach einem der vorhergehenden Ansprüche, wobei die Rechner (A, B,..., G) Dateien verwalten und jeder Datei ein oder mehrere Schlüsselwörter (kw1, kw2,...,kw12) zugeordnet sind, wobei die Schlüsselwörter (kw1, kw2,..., kw12) einer Datei den Inhalt der Datei charakterisieren und von Benutzern der Rechner (A, B,..., G) im Datennetz gesucht werden können.

11. Verfahren nach einem der vorhergehenden Ansprüche, wobei wenigstens ein Teil der Rechner (A, B,..., G) Prioritäten für die Übertragungsschichten (L_kw1, L_kw2, L_kw3) vergibt.

12. Verfahren nach Anspruch 11, wobei eine Übertragungsschicht (L_kw1, L_kw2, L_kw3) eine um so höhere Priorität erhält, je öfter das ihr zugeordnete Schlüsselwort (kw1, kw2,..., kw12) zuvor im Datennetz gesucht und/oder gefunden wurde.

13. Verfahren zur Lokalisation von Daten in einem Datennetz in der Form eines Peer-to-Peer-Netzwerks mit einer Mehrzahl von Rechnern (A, B,..., G), wobei jedem Rechner (A, B,..., G) eine Rechneridentität zugeordnet ist und jeder Rechner (A, B,..., G) zu einem anderen Rechner (A, B,..., G) eine Datenverbindung herstellen kann und wobei in jedem Rechner (A, B,..., G) ein oder mehrere Schlüsselwörter (kw1, kw2,..., kw12) hinterlegt sind, welche die auf dem jeweiligen Rechner (A, B,..., G) gespeicherten Daten charakterisieren,
mit folgenden Schritten:
i) das Datennetz wird gemäß einem Verfahren nach einem der vorhergehenden Ansprüche initialisiert und/oder aktualisiert;
ii) durch wenigstens einen Rechner (A, B,..., G) des Datennetzes wird eine Suchanfrage nach einem oder mehreren Schlüsselwörtern (kw1, kw2,...,kw12) erzeugt;
iii) die Suchanfrage wird an die Rechner (A, B,..., G) des Datennetzes weitergeleitet, wobei ein Rechner (A, B,..., G) vor der Weiterleitung einer Suchanfrage diejenigen seiner Übertragungsschichten (L_kw1, L_kw2, L_kw3) ermittelt, welche durch die Schlüsselwörter der Suchanfrage charakterisiert sind, und anschließend nur Rechner (A, B,..., G) einer oder mehrerer ermittelter Übertragungsschichten (L_kw1, L_kw2, L_kw3) bei der Weiterleitung berücksichtigt;
iv) wenn eine Suchanfrage von einem Rechner (A, B,..., G) empfangen wird, der zu einer und/oder mehreren und/oder allen Übertragungsschichten (L_kw1, L_kw2, L_kw3) gehört, welche durch Schlüsselwörter (kw1, kw2,..., kw12) der Suchanfrage charakterisiert sind, werden die mit den Schlüsselwörtern (kw1, kw2,..., kw12) der Suchanfrage verknüpften Daten auf diesem Rechner (A, B,..., G) als die durch das Verfahren lokalisierten Daten identifiziert.

14. Verfahren nach Anspruch 13, wobei ein Rechner (A, B,..., G), der im Schritt iii) keine Übertragungsschichten (L_kw1, L_kw2, L_kw3) ermitteln kann, bei der Weiterleitung der Suchanfrage alle Rechner (A, B,..., G) der Übertragungsschichten (L_kw1, L_kw2, L_kw3) berücksichtigt, zu denen er gehört.

15. Verfahren nach Anspruch 13 oder 14, wobei ein Rechner (A, B,..., G) im Schritt iii) eine Suchanfrage nur an diejenigen Rechner (A, B,..., G) der von ihm ermittelten Übertragungsschichten (L_kw1, L_kw2, L_kw3) weiterleitet, die der Rechner (A, B,..., G) nicht mit dem Rechner (A, B,..., G) gemeinsam hat, von dem er die Suchanfrage erhalten hat, falls solche Übertragungsschichten (L_kw1, L_kw2, L_kw3) existieren.

16. Verfahren nach einem der Ansprüche 13 bis 15, wobei ein Rechner (A, B,..., G) eine Suchanfrage nur verarbeitet und weiterleitet, wenn er die Suchanfrage noch nicht erhalten hat.

17. Verfahren nach einem der Ansprüche 13 bis 16 in Kombination mit dem Verfahren nach Anspruch 11 oder 12, wobei ein Rechner (A, B,..., G) eine Suchanfrage im Schritt iii) nur an die Rechner (A, B,..., G) weiterleitet, die zu der ermittelten Übertragungsschicht (L_kw1, L_kw2, L_kw3) mit der höchsten Priorität gehören.

18. Verfahren zur Übertragung von Daten in einem Datennetz in der Form eines Peer-to-Peer-Netzwerks, mit folgenden Schritten:
i) Daten in dem Datennetz werden durch das Verfahren nach einem der Ansprüche 13 bis 17 über eine von einem Rechner (A, B,..., G) erzeugte Suchanfrage lokalisiert;
ii) von dem Rechner (A, B,..., G), auf dem sich die lokalisierten Daten befinden, werden die Daten wenigstens teilweise an den Rechner (A, B,..., G) übertragen, der die Suchanfrage erzeugt hat.

19. Datennetz in der Form eines Peer-to-Peer-Netzwerks mit einer Mehrzahl von Rechnern (A, B,..., G), wobei jedem Rechner (A, B,..., G) eine Rechneridentität zugeordnet ist und jeder Rechner (A, B,..., G) zu einem anderen Rechner (A, B,..., G) eine Datenverbindung herstellen kann und wobei in jedem Rechner (A, B,..., G) ein oder mehrere Schlüsselwörter (kw1, kw2,..., kw12) hinterlegt sind, welche die auf dem jeweiligen Rechner (A, B,..., G) gespeicherten Daten charakterisieren,
wobei die Rechner (A, B,...,G) des Datennetzes derart ausgestaltet sind, dass im Betrieb des Datennetzes ein Verfahren nach einem der vorhergehenden Ansprüche durchgeführt wird.

## Claims

1. Method for initialising and/or updating a data network in the form of a peer-to-peer network having a plurality of computers (A, B,..., G), wherein each computer (A, B,..., G) is assigned a computer identity and each computer (A, B,..., G) can establish a data connection to another computer (A, B,..., G) and wherein there are stored in each computer (A, B,..., G) one or more keywords (kw1, kw2,..., kw12) which characterise the data stored on the respective computer (A, B,..., G),
said method comprising the following steps:
a) at least some of the computers (A, B,..., G) of the data network forward messages (q) to one another in order to ascertain for at least some of the keywords (kw1, kw2,..., kw12) stored in the computers (A, B,..., G) which computers (A, B,..., G) include the same or similar keywords (kw1, kw2,..., kw12);
b) a transmission layer (L_kw1, L_kw2, L_kw3) is generated for each keyword (kw1, kw2,..., kw12) for which the same or similar keywords (kw1, kw2,..., kw12) exist, which transmission layer (L_kw1, L_kw2, L_kw3) is **characterised by** the respective keyword (kw1, kw2,..., kw12) and to which the computers (A, B,..., G) having the same or similar keywords (kw1, kw2,..., kw12) belong, with information in each case being stored in at least some of the computers (A, B,..., G) indicating to which transmission layers (L_kw1, L_kw2, L_kw3) the respective computer (A, B,..., G) belongs and which further computers (A, B,..., G) belong to said transmission layers (L_kw1, L_kw2, L_kw3), with a transmission layer being embodied in such a way that when search queries for keywords are forwarded only computers lying in a transmission layer which is **characterised by** at least one keyword of the search query are taken into consideration.

2. Method according to claim 1, wherein a message (q) is processed and forwarded only by those computers (A, B,..., G) which have not yet received the message (q).

3. Method according to one of the preceding claims, wherein step a) comprises the following substeps:
a.1) one or more computers (A, B,..., G) of the data network generate messages (q), each of which contains the sender identity of the sending computer (A, B,..., G) and at least some of the keywords (kw1, kw2,..., kw12) stored in the sending computer (A, B,..., G);
a.2) the messages (q) generated in step a.1) are forwarded by the computers (A, B,..., G) in the data network, with each computer (A, B,..., G) which receives a forwarded message (q) ascertaining those keywords (kw1, kw2,..., kw12) from the received message (q) which match or are similar to the keywords (kw1, kw2,..., kw12) that are stored on it;
a.3) each computer (A, B,..., G) which has ascertained one or more matching or similar keywords (kw1, kw2,..., kw12) in step a.2) sends a response (a) including its computer identity and the keywords (kw1, kw2,..., kw12) ascertained in step a.2) to the computer (A, B,..., G) with the sender identity of the message (q) received in step a.2).

4. Method according to claim 3, wherein step b) comprises the following substeps:
b.1) each computer (A, B,..., G) which has ascertained one or more matching or similar keywords (kw1, kw2,..., kw12) in step a.2) assigns, for each ascertained keyword (kw1, kw2,..., kw12), the computer (A, B,..., G) with the sender identity of the previously received message (q) to the transmission layer (L_kw1, L_kw2, L_kw3) which is **characterised by** the ascertained keyword (kw1, kw2,..., kw12) ;
b.2) each computer (A, B,..., G) which received a response (a) in step a.3) assigns, for each keyword (kw1, kw2,..., kw12) contained in the response (a), the computer identity contained in the response (a) to the transmission layer (L_kw1, L_kw2, L_kw3) which is **characterised by** the keyword (kw1, kw2,..., kw12).

5. Method according to one of the preceding claims, wherein in at least some of the computers (A, B,..., G) a separate transmission layer (L_weak) is generated to which the computers (A, B,..., G) which are connected to the respective computer (A, B,..., G) and which have no transmission layer (L_kw1, L_kw2, L_kw3) in common with the respective computer (A, B,..., G) belong.

6. Method according to one of the preceding claims, wherein steps a) and b) of the method according to claim 1 are performed with at least some of the computers (A, B,..., G) of the data network at predefined time intervals and/or when the keywords (kw1, kw2,..., kw12) stored in the computers (A, B,..., G) are changed.

7. Method according to claim 6, wherein the messages (q) are exchanged between computers (A, B,..., G) which belong to the same transmission layers (L_kw1, L_kw2, L_kw3).

8. Method according to one of the preceding claims, wherein the computers (A, B,..., G) of the data network communicate with one another via internet connections.

9. Method according to claim 8, wherein the computer identities are defined by means of the IP addresses of the computers (A, B,..., G).

10. Method according to one of the preceding claims, wherein the computers (A, B,..., G) manage files and each file is assigned one or more keywords (kw1, kw2,..., kw12), with the keywords (kw1, kw2,..., kw12) of a file characterising the contents of the file and being able to be searched for by users of the computers (A, B,..., G) in the data network.

11. Method according to one of the preceding claims, wherein at least some of the computers (A, B,..., G) assign priorities to the transmission layers (L_kw1, L_kw2, L_kw3).

12. Method according to claim 11, wherein a transmission layer (L_kw1, L_kw2, L_kw3) receives a higher priority the more frequently the keyword (kw1, kw2,..., kw12) assigned to it has been searched for and/or found previously in the data network.

13. Method for locating data in a data network in the form of a peer-to-peer network having a plurality of computers (A, B,..., G), wherein each computer (A, B,..., G) is assigned a computer identity and each computer (A, B,..., G) can establish a data connection to another computer (A, B,..., G) and wherein one or more keywords (kw1, kw2,..., kw12) which characterise the data stored on the respective computer (A, B,..., G) are stored in each computer (A, B,..., G),
said method comprising the following steps:
i) the data network is initialised and/or updated in accordance with a method according to one of the preceding claims;
ii) a search query for one or more keywords (kw1, kw2,..., kw12) is generated by at least one computer (A, B,..., G) of the data network;
iii) the search query is forwarded to the computers (A, B,..., G) of the data network, with a computer (A, B,..., G) determining, prior to the forwarding of a search query, those of its transmission layers (L_kw1, L_kw2, L_kw3) which are **characterised by** the keywords of the search query, and subsequently only computers (A, B,..., G) of one or more determined transmission layers (L_kw1, L_kw2, L_kw3) are taken into consideration during the forwarding;
iv) when a search query is received by a computer (A, B,..., G) which belongs to one and/or more and/or all of the transmission layers (L_kw1, L_kw2, L_kw3) which are **characterised by** keywords (kw1, kw2,..., kw12) of the search query, the data on said computer (A, B,..., G) linked with the keywords (kw1, kw2,..., kw12) of the search query is identified as the data located by means of the method.

14. Method according to claim 13, wherein a computer (A, B,..., G) which cannot determine any transmission layers (L_kw1, L_kw2, L_kw3) in step iii) takes into consideration, for the forwarding of the search query, all computers (A, B,..., G) of the transmission layers (L_kw1, L_kw2, L_kw3) to which it belongs.

15. Method according to claim 13 or 14, wherein in step iii) a computer (A, B,..., G) forwards a search query only to those computers (A, B,..., G) of the transmission layers (L_kw1, L_kw2, L_kw3) determined by it which the computer (A, B,..., G) does not have in common with the computer (A, B,..., G) from which it received the search query if such transmission layers (L_kw1, L_kw2, L_kw3) exist.

16. Method according to one of claims 13 to 15, wherein a computer (A, B,..., G) processes and forwards a search query only if it has not yet received the search query.

17. Method according to one of claims 13 to 16 in combination with the method according to claim 11 or 12, wherein in step iii) a computer (A, B,..., G) forwards a search query only to the computers (A, B,..., G) which belong to the determined transmission layer (L_kw1, L_kw2, L_kw3) with the highest priority.

18. Method for transmitting data in a data network in the form of a peer-to-peer network, said method comprising the following steps:
i) data in the data network is located by means of the method according to one of claims 13 to 17 by way of a search query generated by a computer (A, B,..., G);
ii) the computer (A, B,..., G) on which the located data resides transmits at least some of the data to the computer (A, B,..., G) which generated the search query.

19. Data network in the form of a peer-to-peer network having a plurality of computers (A, B,..., G), wherein each computer (A, B,..., G) is assigned a computer identity and each computer (A, B,..., G) can establish a data connection to another computer (A, B,..., G) and wherein one or more keywords (kw1, kw2,..., kw12) which characterise the data stored on the respective computer (A, B,..., G) are stored in each computer (A, B,..., G),
with the computers (A, B,..., G) of the data network being embodied in such a way that a method according to one of the preceding claims is performed during operation of the data network.

## Revendications

1. Procédé d'initialisation et/ou de mise à jour d'un réseau de données se présentant sous la forme d'un réseau pair à pair avec une pluralité d'ordinateurs (A, B, ..., G), à chaque ordinateur (A, B, ..., G) étant associée une identité d'ordinateur et chaque ordinateur (A, B, ..., G) pouvant établir une liaison de données avec un autre ordinateur (A, B, ..., G) et sur chaque ordinateur (A, B, ..., G) étant déposés un ou plusieurs mots clés (kw1, kw2, ..., kw12) qui caractérisent les données stockées sur l'ordinateur respectif (A, B, ..., G), comportant les étapes suivantes :
a) au moins une partie des ordinateurs (A, B, ..., G) du réseau de données se retransmettent l'un à l'autre des messages (q) pour détecter au moins une partie des mots clés (kw1, kw2, ..., kw12) déposés sur les ordinateurs (A, B, ..., G), quels ordinateurs (A, B, ..., G) contiennent des mots clés identiques (kw1, kw2, ..., kw12) ou des mots clés similaires ;
b) pour chaque mot clé (kw1, kw2, ..., kw12) pour lequel il existe des mots clés (kw1, kw2, ..., kw12) identiques ou similaires, une couche de transmission (L_kw1, L_kw2, L_kw3) est générée, laquelle est **caractérisée par** le mot clé respectif (kw1, kw2, ..., kw12) et dont font partie les ordinateurs (A, B, ..., G) avec les mots clés (kw1, kw2, ..., kw12) identiques ou similaires, l'information indiquant de quelles couches de transmission (L_kw1, L_kw2, L_kw3) fait partie l'ordinateur respectif (A, B, ..., G) et quels autres ordinateurs (A, B, ..., G) font partie de ces couches de transmission (L_kw1, L_kw2, L_kw3) étant respectivement déposée dans au moins une partie des ordinateurs (A, B, ..., G), une couche de transmission étant réalisée de manière telle que, lors de la retransmission de requêtes de recherche de mots clés, seuls sont pris en compte les ordinateurs qui se trouvent dans une couche de transmission qui est **caractérisée par** au moins un mot clé de la requête de recherche.

2. Procédé selon la revendication 1, un message (q) n'étant traité et retransmis que par les ordinateurs (A, B, ..., G) qui n'ont pas encore reçu le message (q).

3. Procédé selon l'une des revendications précédentes, l'étape a) comprenant les sous-étapes suivantes :
a.1) un ou plusieurs ordinateurs (A, B, ..., G) du réseau de données génèrent des messages (q) qui contiennent respectivement l'identité d'émetteur de l'ordinateur émetteur (A, B, ..., G) et au moins une partie des mots clés (kw1, kw2, ..., kw12) déposés dans l'ordinateur émetteur (A, B, ..., G) ;
a.2) les messages (q) générés à l'étape a.1) sont retransmis par les ordinateurs (A, B, ..., G) dans le réseau de données, chaque ordinateur (A, B, ..., G) qui reçoit un message (q) retransmis détectant, à partir du message (q) reçu, les mots clés (kw1, kw2, ..., kw12) qui sont identiques ou similaires aux mots clés (kw1, kw2, ..., kw12) déposés sur lui ;
a.3) chaque ordinateur (A, B, ..., G) qui a détecté un ou plusieurs mots clés identiques ou similaires (kw1, kw2, ..., kw12) à l'étape a.2) envoie une réponse (a) contenant son identité d'ordinateur et les mots clés (kw1, kw2, ..., kw12) détectés à l'étape a.2) à l'ordinateur (A, B, ..., G) avec l'identité de l'émetteur du message (q) reçu à l'étape a.2).

4. Procédé selon la revendication 3, l'étape b) comprenant les sous-étapes suivantes :
b.1) chaque ordinateur (A, B, ..., G) qui, à l'étape a.2), a détecté un ou plusieurs mots clés (kw1, kw2, ..., kw12) identiques ou similaires associe, pour chaque mot clé détecté (kw1, kw2, ..., kw12), l'ordinateur (A, B, ..., G) avec l'identité de l'émetteur du message (q) préalablement reçu à la couche de transmission (L_kw1, L_kw2, L_kw3) qui est **caractérisée par** le mot clé détecté (kw1, kw2, ..., kw12) ;
b.2) chaque ordinateur (A, B, ..., G) qui, à l'étape a.3), a reçu une réponse (a) associe, pour chaque mot clé (kw1, kw2, ..., kw12) contenu dans la réponse (a), l'identité d'ordinateur contenue dans la réponse (a) à la couche de transmission (L_kw1, L_kw2, L_kw3) qui est **caractérisée par** le mot clé (kw1, kw2, ..., kw12).

5. Procédé selon l'une des revendications précédentes, dans au moins une partie des ordinateurs (A, B, ..., G) étant générée une couche de transmission séparée (L_weak) dont font partie les ordinateurs (A, B, ..., G) connectés à l'ordinateur respectif (A, B, ..., G) qui n'ont pas de couche de transmission (L_kw1, L_kw2, L_kw3) en commun avec l'ordinateur respectif (A, B, ..., G).

6. Procédé selon l'une des revendications précédentes, les étapes a) et b) du procédé selon la revendication 1 étant exécutées avec au moins une partie des ordinateurs (A, B, ..., G) du réseau de données dans des intervalles de temps prédéterminés et/ou en cas de modification des mots clés (kw1, kw2, ..., kw12) déposés sur les ordinateurs (A, B, ..., G).

7. Procédé selon la revendication 6, les messages (q) étant échangés entre des ordinateurs (A, B, ..., G) qui font partie des mêmes couches de transmission (L_kw1, L_kw2, L_kw3).

8. Procédé selon l'une des revendications précédentes, les ordinateurs (A, B, ..., G) du réseau de données communiquant entre eux via des liaisons internet.

9. Procédé selon la revendication 8, les identités des ordinateurs étant fixées par les adresses IP des ordinateurs (A, B, ..., G).

10. Procédé selon l'une des revendications précédentes, les ordinateurs (A, B, ..., G) gérant des fichiers et un ou plusieurs mots clés (kw1, kw2, ..., kw12) étant associés à chaque fichier, les mots clés (kw1, kw2, ..., kw12) d'un fichier caractérisant le contenu du fichier et pouvant être cherchés par des utilisateurs des ordinateurs (A, B, ..., G) dans le réseau de données.

11. Procédé selon l'une des revendications précédentes, au moins une partie des ordinateurs (A, B, ..., G) attribuant des priorités pour les couches de transmission (L_kw1, L_kw2, L_kw3).

12. Procédé selon la revendication 11, une couche de transmission (L_kw1, L_kw2, L_kw3) recevant une priorité d'autant plus élevée que le mot clé (kw1, kw2, ..., kw12) qui lui est associé a été souvent cherché et/ou trouvé préalablement dans le réseau de donnés.

13. Procédé pour localiser des données dans un réseau de données se présentant sous la forme d'un réseau pair à pair avec une pluralité d'ordinateurs (A, B, ..., G), à chaque ordinateur (A, B, ..., G) étant associée une identité d'ordinateur et chaque ordinateur (A, B, ..., G) pouvant établir une liaison de données avec un autre ordinateur (A, B, ..., G) et sur chaque ordinateur (A, B, ..., G) étant déposés un ou plusieurs mots clés (kw1, kw2, ..., kw12) qui caractérisent les données stockées sur l'ordinateur respectif (A, B, ..., G), comportant les étapes suivantes :
i) le réseau de données est initialisé et/ou mis à jour selon un procédé selon l'une des revendications précédentes ;
ii) une requête de recherche d'un ou de plusieurs mots clés (kw1, kw2, ..., kw12) est générée par au moins un ordinateur (A, B, ..., G) du réseau de donnés ;
iii) la requête de recherche est retransmise aux ordinateurs (A, B, ..., G) du réseau de données, un ordinateur (A, B, ..., G) détectant, avant la retransmission d'une requête de recherche, celles de ses couches de transmission (L_kw1, L_kw2, L_kw3) qui sont **caractérisées par** les mots clés de la requête de recherche et ne tenant ensuite compte, lors de la retransmission, que d'ordinateurs (A, B, ..., G) d'une ou de plusieurs couches de transmission détectées (L_kw1, L_kw2, L_kw3) ;
iv) lorsqu'une requête de recherche est reçue par un ordinateur (A, B, ..., G) qui fait partie d'une et/ou de plusieurs et/ou de toutes les couches de transmission (L_kw1, L_kw2, L_kw3) qui sont **caractérisées par** des mots clés (kw1, kw2, ..., kw12) de la requête de recherche, les données associées aux mots clés (kw1, kw2, ..., kw12) de la requête de recherche sont identifiées, sur cet ordinateur (A, B, ..., G), comme étant les données localisées par le procédé.

14. Procédé selon la revendication 13, un ordinateur (A, B, ..., G) qui ne peut pas détecter de couche de transmission (L_kw1, L_kw2, L_kw3) à l'étape iii) tenant compte, lors de la retransmission de la requête de recherche, de tous les ordinateurs (A, B, ..., G) des couches de transmission (L_kw1, L_kw2, L_kw3) dont il fait partie.

15. Procédé selon la revendication 13 ou 14, un ordinateur (A, B, ..., G) retransmettant, à l'étape iii), une requête de recherche uniquement aux ordinateurs (A, B, ..., G) des couches de transmissions (L_kw1, L_kw2, L_kw3) détectées par lui-même que l'ordinateur (A, B, ..., G) n'a pas en commun avec l'ordinateur (A, B, ..., G) dont il a reçu la requête de recherche si de telles couches de transmission (L_kw1, L_kw2, L_kw3) existent.

16. Procédé selon l'une des revendications 13 à 15, un ordinateur (A, B, ..., G) ne traitant et ne retransmettant une requête de recherche que s'il n'a pas encore reçu la requête de recherche.

17. Procédé selon l'une des revendications 13 à 16 en combinaison avec le procédé selon la revendication 11 ou 12, un ordinateur (A, B, ..., G) retransmettant, à l'étape iii), une requête de recherche uniquement aux ordinateurs (A, B, ..., G) qui font partie de la couche de transmission détectée (L_kw1, L_kw2, L_kw3) qui a la priorité la plus élevée.

18. Procédé pour la transmission de données dans un réseau de données se présentant sous la forme d'un réseau pair à pair, comportant les étapes suivantes :
i) des données du réseau de données sont localisées par le procédé selon l'une des revendications 13 à 17 par l'intermédiaire d'une requête de recherche générée par un ordinateur (A, B, ..., G) ;
ii) de l'ordinateur (A, B, ..., G) sur lequel se trouvent les données localisées, les données sont transmises au moins en partie à l'ordinateur (A, B, ..., G) qui a généré la requête de recherche.

19. Réseau de données se présentant sous la forme d'un réseau point à point avec une pluralité d'ordinateurs (A, B, ..., G), à chaque ordinateur (A, B, ..., G) étant associée une identité d'ordinateur et chaque ordinateur (A, B, ..., G) pouvant établir une liaison de données avec un autre ordinateur (A, B, ..., G) et sur chaque ordinateur (A, B, ..., G) étant déposés un ou plusieurs mots clés (kw1, kw2, ..., kw12) qui caractérisent les données stockées sur l'ordinateur respectif (A, B, ..., G), les ordinateurs (A, B, ..., G) du réseau de données étant réalisés de manière telle qu'un procédé selon l'une des revendications précédentes est exécuté pendant le fonctionnement du réseau de données.
